# EUROPÄISCHE PATENTSCHRIFT

(11) **EP 0 649 179 B1**
(45) Veröffentlichungstag und Bekanntmachung des Hinweises auf die Patenterteilung: **16.10.1996**
(21) Anmeldenummer: 94108427.9
(22) Anmeldetag: 01.06.1994
(51) Int. Cl.: H01M 2/10, B65D 25/32

(54) **Akkumulator**
Battery
Accumulateur

(30) Priorität: 16.09.1993 DE 9314019 U
(43) Veröffentlichungstag der Anmeldung: 19.04.1995
(73) Patentinhaber: VB Autobatterie GmbH, D-30419 Hannover (DE)
(72) Erfinder: Streuer, Peter, D-30625 Hannover (DE)
(74) Vertreter: Kaiser, Dieter Ralf, Dipl.-Ing.

(56) Entgegenhaltungen:
- EP-A- 0 499 035
- DE-U- 9 314 019

## Beschreibung

Die Erfindung betrifft einen Akkumulator mit Kunststoffgehäuse, dessen Kasten mit einem ein- oder mehrteiligen Deckel verschlossen ist und welcher am Deckel befestigte Tragegriffe aufweist, die in Ruhestellung über die Deckelkontur nicht hinausragen.

Insbesondere zur Handhabung und zum Transportieren von Starterbatterien, die infolge der Bleiplatten in ihrem Innern sehr schwer sind und sich nur mit Mühe heben lassen, sind vielfältige Trageeinrichtungen bekannt. Unter diesen haben sich stabile Griffbügel aus Kunststoff bewährt, die meist gelenkig am Batteriedeckel befestigt sind und aus einer flachliegenden Ruheposition heraus in eine hochgeklappte Trageposition geschwenkt werden.

Derartige Griffbügel sind mit Blick auf eine moderne Batteriemontage mittels Robotern günstig, insbesondere dann, wenn sie im Nichtgebrauchszustand ganz dem Umriß von Batteriedeckel und Blockkasten angepaßt sind und im Gegensatz etwa zu herabhängenden Tragekordeln den Zugriff des Roboterwerkzeugs nicht behindern.

Die Deckel von Starterbatterien sind in der Regel einteilig, zum Teil auch mehrteilig ausgebildet, z.B. als Doppeldeckel. Ein solcher besteht aus einem Basisdeckel, der das Gehäuse mit den Zellen abschließt, und einem dem Basisdeckel aufgesetzten Abdeckteil, dessen Umriß kleiner ist und welches zumindest die Flächenteile des Basisdeckels im Bereich der Batterie-Endpole frei läßt.

In dem Raum zwischen Basisdeckel und Abdeckteil befindet sich das zentrale Entgasungssystem der Batterie.

Aus der EP-A-297229 ist eine Batterie mit Tragegriffen bekannt, bei welcher das Abdeckteil ihres Doppeldeckels im Griffbereich nochmals in eine obere Oberdeckelplatte und eine untere Oberdeckelplatte unterteilt ist. Zwischen diesen zueinander höhenversetzten Platten sind die Enden zweier U-förmiger Tragegriffe aus elastischem Kunststoff derart verankert, daß sie in der Ruheposition auf der unteren Oberdeckelplatte aufliegen und damit noch unterhalb der Deckfläche des Doppeldeckels verlaufen. Zum Gebrauch werden die Griffe um eine Kante der oberen Oberdeckelplatte senkrecht nach oben gebogen. Nach Gebrauch werden sie in die Ruheposition zurückgedrückt und in derselben u.a. durch einen Klemmsteg fixiert.

Der vorliegenden Erfindung liegt die Aufgabe zugrunde, einen Akkumulator mit Tragegriffen gemäß dem eingangs formulierten Gattungsbegriff anzugeben, dessen Griffe benutzungsfreundlich sind, sich leicht anbringen lassen und einer robotergerechten Montage des Akkumulators im Automobilwerk entgegenkommen.

Die Aufgabe wird erfindungsgemäß mit einem Akkumulator nach den Merkmalen des Anspruchs 1 gelöst.

Danach sind zwei Griffe am Batteriedeckel drehbar gelagert und Drehzapfen am Deckel angeformt, die jeweils aus einer unteren Halbschale und den Kreis ergänzenden Stützrippen bestehen. Die Stützrippen stehen bei mehrteiligen Deckein frei, bei einteiligen Deckeln sind sie angebunden.

Nähere Details der Erfindung werden anhand einiger Figuren beschrieben.
- Figur 1: zeigt den Akkumulatorendeckel von oben mit montierten Griffen.
- Figur 2: zeigt den Akkumulatorendeckel von vorn mit einem Griff in Ruhestellung, einem Griff aufgestellt.
- Figur 3: zeigt den Akkumulatorendeckel von oben ohne Griffe.
- Figur 4: zeigt den Akkumulatorendeckel von vorn ohne Griffe.
- Figur 5: zeigt einen Drehzapfen von vorn
- Figur 6: zeigt einen Drehzapfen von oben
- Figur 7: zeigt einen Griff auf Drehzapfen montiert von vorn.
- Figur 8: zeigt einen Schnitt durch die Bohrung im Schenkel des Griffes
- Figur 9: zeigt einen Griff auf Drehzapfen montiert von oben.

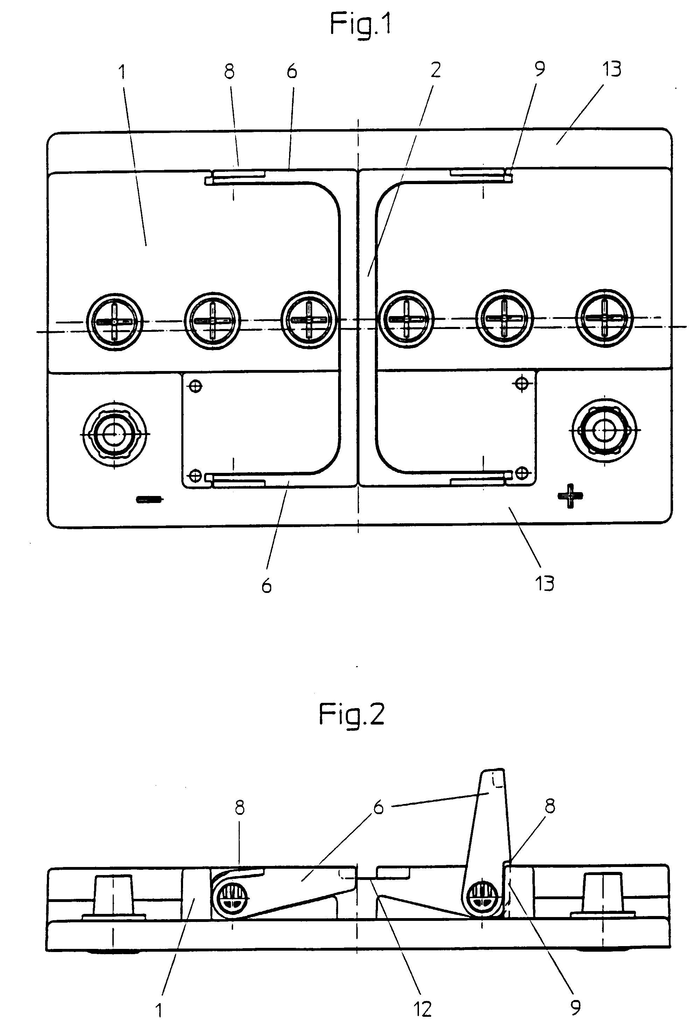

Nach Fig. 1 sind in die Oberfläche des Akkumulatorendeckels 1 zwei spiegelbildlich zueinanderliegende, U-förmige Griffe 2 aus Kunststoff integriert, deren Konturen sich in einer die Deckeloberfläche teilenden Vertiefung 12 (vgl. Fig.2) berühren. Die Schenkel 6 der U-förmigen Griffe sind an Seitenwänden des Deckels 1, der sich in einem Abstand sowohl vom vorderen als auch vom hinteren Deckelrand über den Deckelabsatz 13 erhebt, schwenkbar befestigt. Der an beiden Längsseiten des Deckels vorhandene Absatz 13 ermöglicht ein Verspannen der Batterie.

Im Schwenkbereich der Griffe sind in dem Deckel Nute 9 ausgeformt, in welche beim Hochklappen der Griffe an deren Schenkeln ausgebildete nasenförmige Absätze 8 eintauchen, wodurch die Nute den Schenkeln eine exakte Führung geben. Diese Funktion der Nute 9 wird in Fig. 2, die den Akkumulatorendeckel von vorn wiedergibt, an dem aufgestellten Tragegriff deutlich.

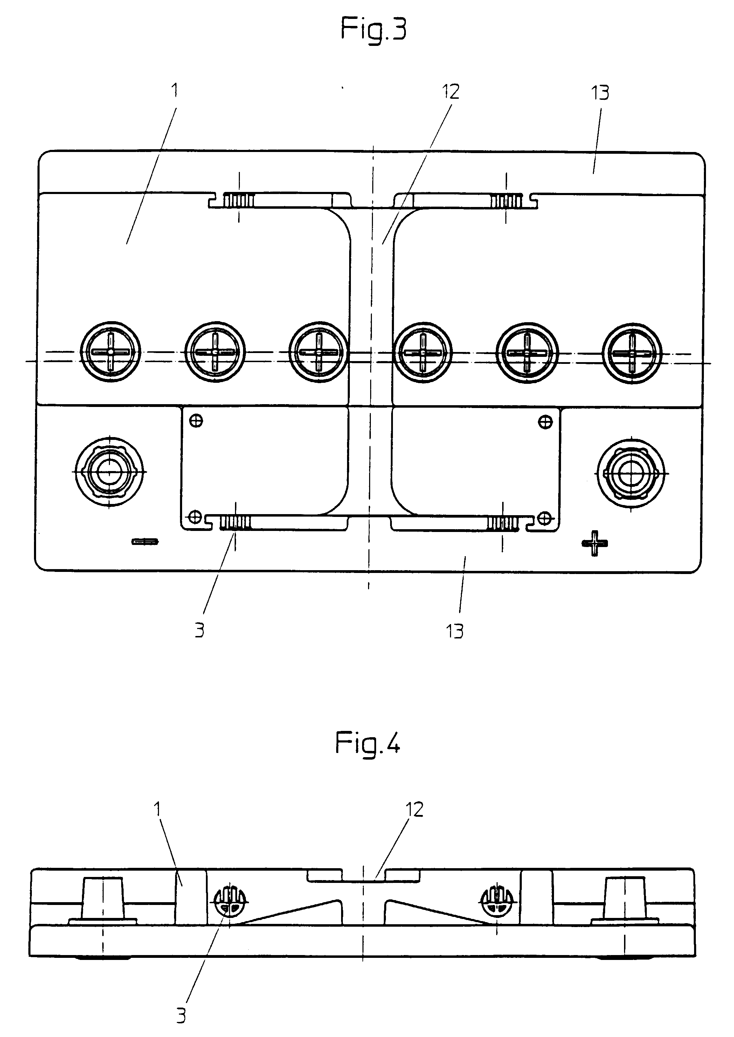

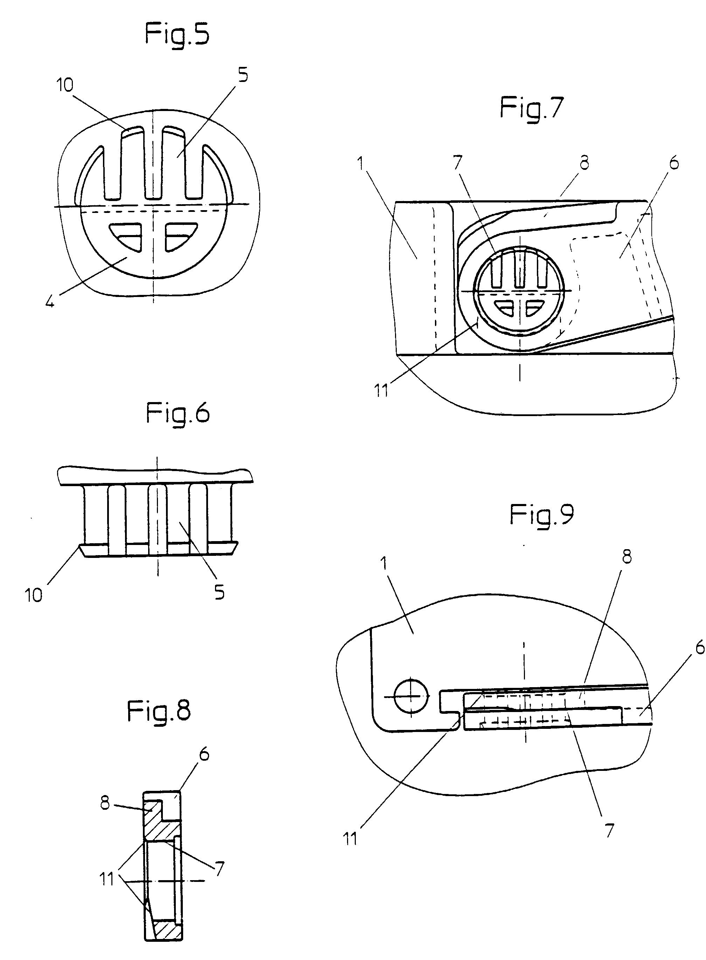

Die Befestigung des Tragegriffes am Deckel erfolgt mittels eines Drehzapfens 3, wie er aus den Figuren 3 und 4 mit Deckelansichten ohne die Tragegriffe, von oben und von vorn, erkennbar ist. Der Drehzapfen 3 ist an die Seitenwand des Deckels angeformt und in den Figuren 5 und 6 vergrößert wiederggegeben. Seine untere Hälfte bildet eine Halbschale 4, seine obere Hälfte ist fingerförmig in Stützrippen 5 aufgegliedert. Die Stützrippen weisen an ihren Enden jeweils einen Hinterschnitt 10 auf. Figur 6 ist eine Ansicht des Drehzapfens von oben. Auch diese Stützrippen sind an den Deckel angeformt bzw. angebunden.

Bei mehrteiligen Deckeln, die aus einem Unterdeckel und aus einem Abdeckteil bestehen, sind die Halbschalen des Drehzapfens an den Unterdeckel angeformt; die an die Halbschalen angeformten Stützrippen hingegen ragen, da das Abdeckteil vom Rand des Unterdeckels zurücksteht, frei nach oben.

Zum Anbringen des Tragegriffs am Deckel werden die Griffschenkel, die eine mit dem Drehzapfen korrespondierende Bohrung 7 aufweisen, fest auf die Drehzapfen aufgedrückt. Dabei rasten die Hinterschneidungen 10 hinter den Schenkeln ein und machen die Befestigung unlösbar.

Fig.7 gibt den Griffschenkel 6 mit der Bohrung 7, die von dem Drehzapfen ausgefüllt wird, im fertig montierten Zustand wieder. Der Tragegriff befindet sich dabei in seiner Ruheposition.

Eine mit 11 bezeichnete Einführungsschräge an den Innenseiten der Schenkel, die der Querschnittdarstellung des Schenkels im Bereich der Bohrung 7 in Fig. 8 besser zu entnehmen ist, erleichtert die Positionierung des Schenkels auf dem Drehzapfen bei der Montage. Man erkennt ferner den Absatz 8 des Schenkelprofils, welcher beim Hochschwenken des Griffs zunehmend in die Nut 9 (vgl. Fig.1 und 2) eindringt, so daß der Schenkel bei seinen Bewegungen zwischen Ruhe- und Tragposition exakt geführt wird.

Fig.9 zeigt den auf den Drehzapfen montierten Griffschenkel nach Fig.7 von oben.

In den Fig. 7 und 9 ist ferner eine leichte Anfasung des Absatzes 8 am Ende des Schenkels 6 zu erkennen. Diese sorgt dafür, daß beim Aufrichten des Schenkels aus der Ruhelage der Absatz 8 von der Nut 9 zuverlässig gefaßt wird.

Der erfindungsgemäße Akkumulator hat den Vorteil, daß seine Tragegriffe mit geringstem Aufwand montiert werden können, daß sie handgerecht und besonders zuverlässig befestigt sind, und daß der so ausgestattete Akkumulator problemlos einer Robotermontage beim Automobilhersteller überlassen werden kann.

## Patentansprüche

1. Akkumulator mit Kunststoffgehäuse, dessen Kasten mit einem ein- oder mehrteiligen Deckel verschlossen ist und welcher am Deckel befestigte Tragegriffe aufweist, die in Ruhestellung über die Deckelkontur nicht hinausragen, dadurch gekennzeichnet, daß zwei Griffe (2) am Deckel (1) drehbar gelagert sind, wobei der am Deckel angeformte Drehzapfen (3) aus einer unteren Halbschale (4) und den Kreis ergänzenden Stützrippen (5) besteht.

2. Akkumulator nach Anspruch 1, dadurch gekennzeichnet, daß bei einteiligen Deckeln sowohl die Halbschale als auch die Stützrippen des Deckelzapfens an die Seitenwand des Deckels angeformt sind, und daß bei mehrteiligen Deckeln, die aus einem Unterdeckel und einem von dessen Rand zurückliegenden Abdeckteil bestehen, die Stützrippen freistehend sind.

3. Akkumulator nach Anspruch 1 oder 2, dadurch gekennzeichnet, daß die Griffe (2) zwei Schenkel (6) besitzen, deren Enden mit einer Bohrung (7) versehen sind, welche den Drehzapfen (3) aufnimmt, und daß die Schenkel oberhalb der Bohrung einen Absatz (8) aufweisen, der beim Aufrichten des Griffes in eine Nut (9) des Deckels (1) taucht.

4. Akkumulator nach einem der Ansprüche 1 bis 3, dadurch gekennzeichnet, daß die Stützrippen (5) am Drehzapfen (3) an ihrer Oberseite einen Hinterschnitt (10) zur Fixierung der Griffe (2) in Ruhestellung auf dem Drehzapfen (3) aufweisen.

5. Akkumulator nach einem der Ansprüche 1 bis 4, dadurch gekennzeichnet, daß die Bohrung (7) an den Schenkeln (6) der Griffe (2) an den Innenseiten mit Einführungsschrägen (11) versehen sind, die ein leichteres Montieren ermöglichen.

6. Akkumulator nach einem der Ansprüche 1 bis 5, dadurch gekennzeichnet, daß der Deckel (1) an der Oberseite in der Mitte eine Vertiefung (12) aufweist, in die die Griffkontur eintaucht.

7. Akkumulator nach einem der Ansprüche 1 bis 6, dadurch gekennzeichnet, daß der Deckel auf beiden Längsseiten einen Absatz (13) aufweist, über den die Batterie verspannt werden kann.

## Claims

1. An accumulator having a housing of plastics material, whereof the casing is closed by means of a cover comprising one or a plurality of parts and which has carrying handles secured to the cover which, in the unused position, do not project above the outline of the cover, characterized in that two handles (2) are rotatably mounted on the cover (1), the pivot pin (3) integrally formed on the cover comprising a lower half-shell (4) and reinforcing ribs (5) completing the circle.

2. An accumulator according to Claim 1, characterized in that, in covers comprising one part, both the half-shell and the reinforcing ribs of the cover pin are integrally formed on the side wall of the cover, and in that, in covers having a plurality of parts, which comprise a lower cover and a cover part standing away from the edge thereof, the reinforcing ribs are freestanding.

3. An accumlator according to Claim 1 or 2, characterized in that the handles (2) have two limbs (6) whereof the ends are provided with a bore (7) which receives the pivot pin (3), and in that the limbs have a shoulder (8) above the bore, this shoulder being inserted in a groove (9) in the lid (1) when the handle is raised.

4. An accumulator according to one of Claims 1 to 3, characterized in that the reinforcing ribs (5) on the pivot pin (3) have on their upper side an undercut (10) for fixing the handles (2) on the pivot pin (3) in the unused position.

5. An accumulator according to one of Claims 1 to 4, characterized in that the bores (7) on the limbs (6) of the handles (2) are provided with oblique entry points (11) on the inside, which enable easier assembly.

6. An accumulator according to one of Claims 1 to 5, characterized in that the cover (1) has on its upper side, in the centre, a cavity (12) into which the outline of the handle is inserted.

7. An accumulator according to one of Claims 1 to 6, characterized in that the cover has a shoulder (13) on both longitudinal sides, by means of which the battery can be braced.

## Revendications

1. Accumulateur à boîtier en matière plastique dont la caisse est fermée par un couvercle en une ou plusieurs parties, et comportant des poignées de transport fixées au couvercle, ces poignées ne dépassant pas du contour du couvercle lorsqu'elles sont en position de repos, caractérisé en ce que deux poignées (2) sont montées pivotantes sur le couvercle (1), le téton (3) formé sur le couvercle se composant d'une demi-coquille inférieure (4) et de nervures d'appui (5) complétant le cercle.

2. Accumulateur selon la revendication 1, caractérisé en ce que dans le cas de couvercles en une seule pièce à la fois la demi-coquille et les nervures d'appui du téton du couvercle sont formées sur la paroi latérale du couvercle et dans le cas de couvercles en plusieurs parties, formés d'un couvercle inférieur et d'une partie de recouvrement en retrait par son bord par rapport au couvercle inférieur, les nervures d'appui sont libres en saillie.

3. Accumulateur selon la revendication 1 ou 2, caractérisé en ce que les poignées (2) portent deux branches (6) dont les extrémités sont munies d'un perçage (7) recevant le téton (3) et en ce que les branches comportent au-dessus du perçage un talon (8) qui pénètre dans une rainure (9) du couvercle (1) lorsqu'on relève la poignée.

4. Accumulateur selon l'une des revendications 1 à 3, caractérisé en ce que les nervures d'appui (5) du téton (3) comportent sur leur côté supérieur, une partie en contre-dépouille (10) pour bloquer la poignée (2) en position de repos sur le téton (3).

5. Accumulateur selon l'une des revendications 1 à 4, caractérisé en ce que le perçage (7) des branches (6) des poignées (2) est muni sur son côté intérieur de surfaces inclinées d'introduction (11) facilitant le montage.

6. Accumulateur selon l'une des revendications 1 à 5, caractérisé en ce que le couvercle (1) comporte dans sa face supérieure, en son milieu une cavité (12) dans laquelle s'immerge le contour de la poignée.

7. Accumulateur selon l'une des revendications 1 à 6, caractérisé en ce que le couvercle comporte une surépaisseur (13) sur ses deux grands côtés par l'intermédiaire desquelles la batterie se fixe en place.
